Europäisches Patentamt

European Patent Office

Office européen des brevets

(11) Numéro de publication : **0 485 257 A1**

# (12) DEMANDE DE BREVET EUROPEEN

(21) Numéro de dépôt : 91402880.8

(22) Date de dépôt : 28.10.91

(51) Int. Cl.⁵ : **B66F 9/075,** B62B 3/06

(30) Priorité : 08.11.90 FR 9013847

(43) Date de publication de la demande :
13.05.92 Bulletin 92/20

(84) Etats contractants désignés :
DE GB IT

(71) Demandeur : LOC MANUTENTION, Société
Anonyme dite:
Avenue du Vert Galant, Zone Industrielle
F-95310 St-Ouen-L'Aumone (FR)

(72) Inventeur : **Boivin, Guy**
**10 rue de la Pente**
**F-95000 Jouy Le Moutier (FR)**

(74) Mandataire : **Lhuillier, René et al**
**Cabinet Lepeudry 6, rue du Faubourg**
**St-Honoré**
**F-75008 Paris (FR)**

(54) **Plate-forme rabattable à verrouillage automatique notamment pour chariots du type transpalette ou gerbeur.**

(57) Le corps de plate-forme 3 supporte un plateau 4 mobile par rapport à elle, qui est rappelé par un élément élastique intercalé 15, lequel plateau est équipé de flasques latéraux de verrouillage 9 percés d'une lumière oblongue 10 lui permettant de s'articuler sur l'axe 2 de pivotement de la plate-forme. Chaque entretoise est profilée pour former une dent 11 s'engageant dans une ouverture 12 d'une plaque d'arrêt horizontale 8, pour verrouiller le corps de plate-forme 3.

Application aux chariots à fourche à conducteur tantôt porté, tantôt accompagnant.

FIG.6

L'invention qui se rapporte aux chariots du type transpalette ou gerbeur concerne plus précisément un dispositif de verrouillage automatique des plate-formes rabattables.

Les chariots dits "transpalette" ou "gerbeur" motorisés sont comme on sait utilisés avec conducteur accompagnant, ou de plus en plus fréquemment avec un conducteur transporté ce qui est appréciable pour les longs parcours. Dans ce cas le conducteur s'installe debout sur une plate-forme rabattable fixée au châssis du chariot, du côté opposé aux bras de fourche. Pour les opérations d'approche et dans les lieux exigus, la plate-forme est relevée verticalement contre le flanc du chariot. Lors du déplacement en terrain dégagé ou sur de grandes distances, l'opérateur monte sur la plate-forme en abaissant celle-ci à l'horizontale à l'aide du pied.

Ces plate-formes dites rabattables ou rétractables sont généralement articulées autour d'un axe fixe et se replient plus ou moins automatiquement selon les types de constructions. Dans la majorité des cas, ce sont des systèmes à ressort ou à vérins de compensation qui permettent le rabattement de la plate-forme quand le conducteur en descend. Quand le conducteur est sur la plate-forme, il faut éviter que la rencontre avec un obstacle ne fasse pivoter la plate-forme, ce qui serait dangereux pour l'opérateur. Pour éviter cet inconvénient, il est avantageux de prévoir un système de verrouillage de ladite plate-forme, dans sa position horizontale, tant qu'un conducteur s'y trouve placé. On connaît à cet effet des verrous magnétiques, électromagnétiques, électriques et/ou mécaniques qui sont onéreux et dont l'implantation se fait au détriment de l'encombrement de la plate-forme.

L'invention apporte une solution à ces problèmes en ce qu'elle intègre l'ensemble des fonctions de blocage, de déblocage et de repli de ladite plate-forme dans un système mécanique simple, principalement centralisé au droit du mécanisme d'articulation ce qui, grâce à l'absence de tout verrou électrique ou électromécanique, laisse un volume disponible au droit du plateau de la plate-forme, autorisant l'implantation d'éléments complémentaires de suspension du genre matelas de mousse ou de ressorts qui améliorent le confort de l'usager sans augmenter l'encombrement de la plate-forme.

L'objet principal de l'invention consiste donc en une plate-forme rabattable à verrouillage automatique notamment pour chariot de type transpalette comportant un corps de plate-forme rabattable le long du chariot sous l'action d'un mécanisme d'articulation à ressort selon laquelle le corps de plate-forme supporte un plateau mobile par rapport à elle et rappelé par au moins un élément élastique intercalé entre les deux, ledit plateau possédant des moyens exclusivement mécaniques assurant le verrouillage du mécanisme d'articulation de la plate-forme quand un conducteur est sur le plateau.

Avantageusement, le mécanisme d'articulation du corps de plate-forme est constitué d'un axe transversal s'étendant le long du chariot entre deux paliers verticaux équipés chacun d'une plaque d'arrêt horizontale et d'au moins un ressort de torsion engagé sur l'axe transversal, dont les extrémités viennent en appui respectivement contre ladite plaque d'arrêt horizontale et contre le corps de plate-forme.

Selon une autre caractéristique principale de l'invention, les flancs du plateau sont équipés de deux flasques percés d'une lumière oblongue lui permettant de s'articuler sur l'axe de pivotement de la plate-forme, chaque flasque étant profilé pour former une dent pouvant s'engager dans une ouverture de la plaque d'arrêt horizontale correspondante pour verrouiller le corps de plate-forme.

D'autres caractéristiques particulières et avantages de l'invention apparaîtront à la lecture de la description qui va suivre d'un exemple non limitatif de réalisation dans lequel il est fait référence aux dessins annexés qui représentent :

Figure 1 une vue en élévation d'un palier fixé au chariot ;

Figures 2 et 3, des vues en coupe respectivement du corps de plate-forme et du plateau ;

Figure 4 une vue de dessus de la plate-forme rabattable ;

Figures 5 et 6 des vues en coupe de la plate-forme respectivement en position plateau verrouillé et plateau déverrouillé ;

Figure 7, une vue en coupe d'une variante de réalisation ;

Figure 8 une vue en élévation du corps de plate-forme en position repliée.

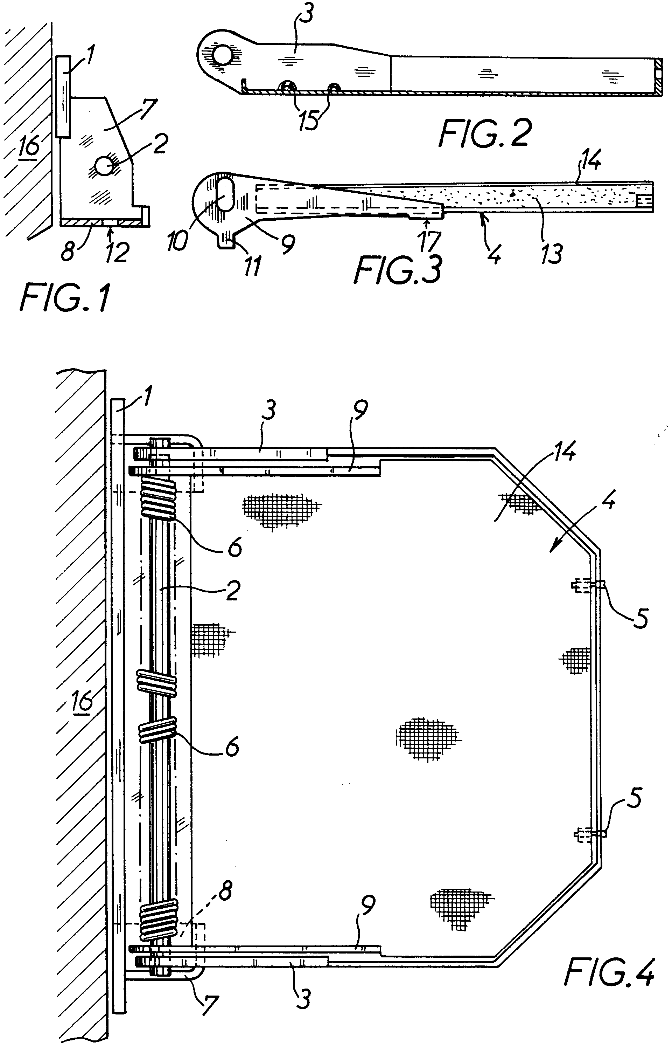

En se référant aux figures 1 à 4, on voit un corps de plate-forme 3 en forme de berceau qui s'articule sur un axe transversal 2 s'étendant le long du chariot 16. Ledit axe est lui-même monté entre deux paliers verticaux 7, solidaires d'une traverse 1 fixée au chariot. Des plaques d'arrêt horizontales 8 sont rapportées à l'extrémité inférieure des paliers. Le corps 3 de la plate-forme reçoit un plateau 4 de configuration identique dont les flancs sont équipés de deux flasques 9 de forme particulière, visibles notamment à la figure 3. Chaque flasque est percé d'une lumière 10 de forme oblongue permettant au plateau de s'articuler sur l'axe 2 avec une possibilité d'un débattement en hauteur par rapport à l'axe. La partie inférieure de ce flasque 9, sous la lumière 10, est profilée pour former une dent 11 pouvant s'engager dans une ouverture 12 prévue à l'aplomb, sur la plaque d'arrêt horizontale 8 correspondante. Sur le plateau 4 sont rapportés des éléments de suspension et de sécurité tels qu'un tapis-mousse 13 et un tapis antidérapant 14. Par ailleurs, entre le plateau 4 et le corps de plate-forme 3 sont implantés des éléments de suspension 15, qui sont par exemple des tampons profilés en caoutchouc, souples et élastiques, formant ressort. Le plateau est maintenu sur le corps de la plate-forme du côté opposé à l'axe 1 par deux ergots non rigides de fixation 5. Ces ergots autorisent un certain déplacement angulaire du plateau 4 par rapport au corps 3 de la plate-forme, déplacement qui est un mouvement de pivotement du plateau au droit des ergots 5, durant son débattement en hauteur rendu possible par les lumières oblongues 10 de chaque flasque 9. En variante les ergots pourraient être remplacés par de simples charnières démontables. Le rabattement de la plate-forme le long du chariot est assuré par un ou plusieurs ressorts de torsion 6, engagés sur l'axe transversal 2, dont les extrémités viennent en appui, d'une part contre la plaque d'arrêt horizontale 8 et d'autre part contre le corps de plate-forme 3.

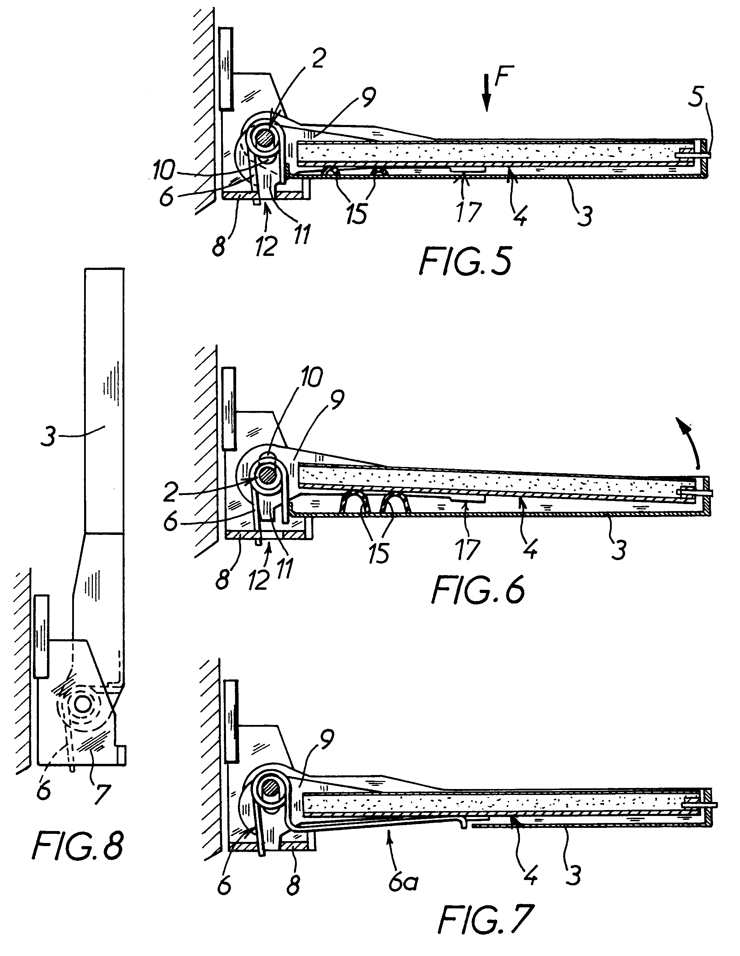

Dans la position représentée à la figure 5 qui correspond à une position de conduite, durant laquelle le conducteur se trouve debout, sur le plateau 4, son poids s'exerçant selon la flèche F provoque l'enfoncement du plateau vers le fond du corps de plate-forme 3, enfoncement qui écrase les éléments de suspension élastique 15. Dans cette position basse, les flasques 9 dudit plateau ont coulissé verticalement sur l'axe 2 qui occupe alors la partie supérieure des lumières 10. De ce fait les dents 11 des flasques se sont engagées dans les ouvertures correspondantes 12 des plaques d'arrêt 8, interdisant tout pivotement ou rabattement intempestif de la plate-forme vers le haut, qui se trouve ainsi parfaitement verrouillée. Il y a en effet un arcboutement des flasques 9 puisque les efforts sont exercés sur elles en trois points d'appui qui sont : leurs extrémités 17 en butée sous le plateau (figure 5), la dent inférieure 11 bloquée dans les ouvertures 12 et la partie haute de la lumière 10 en appui sur l'axe 2. La qualité du verrouillage et son irréversabilité sont donc acquises tant que le conducteur se tient debout sur la plate-forme et quel que soit son poids.

Dès que le conducteur quitte la plate-forme (figure 6), les éléments de suspension 15 à effet ressort repoussent le plateau 4 vers le haut dont les lumières 10 coulissent sur l'axe 2 et les dents 11 se dégagent des ouvertures 12. Le plateau étant donc déverrouillé, le corps de plate-forme 3 est libéré et se trouve rabattu le long du chariot par les ressorts 6 où il occupe la position verticale représentée à la figure 8.

Dans une variante de réalisation représentée à la figure 7, une extrémité du ressort 6 reste en appui contre la plaque d'arrêt 8 mais l'autre extrémité 6a se prolonge pour prendre appui sur le plateau 4 luimême. On obtient ainsi la même pression élastique exercée sous le plateau, vers le haut, ce qui permet de s'affranchir des éléments de suspension élastiques 15 précédemment décrits.

L'invention ne se limite pas à cette application particulière aux chariots de type transpalette ou gerbeur et pourraît être utilisée sur d'autres types de véhicules à conducteur porté sur une plate-forme.

## Revendications

1.- Plate-forme rabattable à verrouillage automatique notamment pour chariots de type transpalette ou gerbeur comportant un corps de plate-forme rabattable le long du chariot sous l'action d'un mécanisme d'articulation à ressort caractérisée en ce que le corps de plate-forme (3) supporte un plateau (4) mobile par rapport à elle et rappelé par au moins un élément élastique (15) intercalé entre les deux, et en ce que ledit plateau possède des moyens (9, 11) exclusivement mécaniques assurant le verrouillage du mécanisme d'articulation (2, 6) de la plate-forme quand un conducteur est sur le plateau.

2.- Plate-forme selon la revendication 1, caractérisée en ce que le mécanisme d'articulation du corps de plate-forme (3) est constitué d'un axe transversal (2) s'étendant le long du chariot (16) entre deux paliers verticaux (7) équipés chacun d'une plaque d'arrêt horizontale (8) et d'au moins un ressort de torsion (6) engagé sur l'axe transversal, dont les extrémités viennent en appui respectivement contre ladite plaque d'arrêt horizontale et contre le corps de plateforme.

3.- Plate-forme selon les revendications 1 et 2, caractérisée en ce que les flancs du plateau (4) sont équipés de deux flasques (9) percés d'une lumière oblongue (10) lui permettant de s'articuler sur l'axe (2) de pivotement de la plate-forme.

4.- Plate-forme selon les revendications 1 à 3, caractérisée en ce que chaque flasque (9) est profilé pour former une dent (11) pouvant s'engager dans une ouverture (12) de la plaque d'arrêt horizontale (8) correspondante pour verrouiller le corps de plateforme (3).

5.- Plate-forme selon les revendications 1 et 2, caractérisée en ce que entre le plateau (4) et le corps de plate-forme (3) sont disposés des éléments élastiques de suspension (15) formant ressort.

6.- Plate-forme selon les renvendications 1, 2 et 5, caractérisée en ce que les éléments élastiques de suspension sont constitués par une prolongation (6a) du ressort (6), prenant appui sur le plateau (4).

7.- Plate-forme selon la revendication 1, caractérisée en ce que sur le plateau (4) est rapporté un élément de suspension du genre d'un tapis-mousse (13).

8.- Plate-forme selon la revendication 1, caractérisée en ce que sur le plateau (4) est rapporté un tapis antidérapant (14).

9.- Plate-forme selon la revendication 1, caractérisée en ce que le plateau (4) est maintenu sur le corps de plate-forme (3) , du côté opposé à l'axe (2), par deux ergots non rigides de fixation (5).

FIG.1

FIG.2

FIG.3

FIG.4

FIG.5

FIG.6

FIG.8

FIG.7

Office européen
des brevets

**RAPPORT DE RECHERCHE EUROPEENNE**

Numero de la demande

EP 91 40 2880

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 346 032 (B.T.)<br>* En entier *<br>--- | 1 | B 66 F 9/075<br>B 62 B 3/06 |
| A | US-A-1 404 419 (WRIGHT)<br>--- | | |
| A | FR-A-2 333 748 (ETS. A. PRAT & CIE)<br>--- | | |
| A | US-A-1 505 889 (HERTNER)<br>--- | | |
| A | US-A-1 948 802 (SCHROEDER)<br>----- | | |

**DOMAINES TECHNIQUES RECHERCHES (Int. Cl.5)**

B 66 F
B 60 P
B 63 B

Le présent rapport a été établi pour toutes les revendications

| Lieu de la recherche | Date d'achèvement de la recherche | Examinateur |
|---|---|---|
| LA HAYE | 17-02-1992 | VAN DEN BERGHE E.J.J. |

EPO FORM 1503 03.82 (P0402)